(19) **Europäisches Patentamt**
**European Patent Office**
**Office européen des brevets**

(11) **EP 2 468 573 B1**

(12) **EUROPEAN PATENT SPECIFICATION**

(45) Date of publication and mention
of the grant of the patent:
**27.08.2014 Bulletin 2014/35**

(21) Application number: **11195143.0**

(22) Date of filing: **22.12.2011**

(51) Int Cl.:
*B60R 1/00* *(2006.01)*    *B60R 21/00* *(2006.01)*
*B62D 15/02* *(2006.01)*    *G01C 11/00* *(2006.01)*
*G06K 9/20* *(2006.01)*    *G06T 1/00* *(2006.01)*
*G06T 15/20* *(2011.01)*    *G08G 1/14* *(2006.01)*
*G08G 1/16* *(2006.01)*    *H04N 5/247* *(2006.01)*
*G06T 7/00* *(2006.01)*    *G06K 9/00* *(2006.01)*
*H04N 5/225* *(2006.01)*

(54) **A system and a method for detecting a parking slot for a vehicle**

System und Verfahren zur Detektion einer Parklücke für ein Kraftfahrzeug

Système et méthode permettant la détection d'une place de parking pour un véhicule

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.12.2010 IT TO20101060**

(43) Date of publication of application:
**27.06.2012 Bulletin 2012/26**

(73) Proprietor: **Magneti Marelli S.p.A.**
**20011 Corbetta (MI) (IT)**

(72) Inventors:
• **Marenco, Daniele**
  **10078 Venaria Reale (Torino) (IT)**
• **Ghisio, Guido**
  **10078 Venaria Reale (Torino) (IT)**

(74) Representative: **Deambrogi, Edgardo et al**
**Corso Emilia 8**
**10152 Torino (IT)**

(56) References cited:
EP-A1- 1 852 673        EP-A1- 2 133 237
EP-A2- 2 081 167        WO-A2-2004/029877
JP-A- 2002 274 304      US-A1- 2008 140 286

EP 2 468 573 B1

**Description**

The present invention concerns driving assistance systems for a vehicle, and in particular parking assistance systems.

More specifically, the invention concerns a system and a method for detecting a parking slot for a vehicle.

Driving assistance systems are known for parking operations, based upon the arrangement of ultrasound sensors or radar that are integrated in the body of the vehicle, adapted to detect the presence of obstacles (in general, but not exclusively, other vehicles) near to the vehicle in view of a parking operation and to monitor the distance of the vehicle from them during the same parking operation.

For this reason sensors are foreseen installed on the vehicle in such a position that the relative field of view extends laterally and partially behind the vehicle. In order to allow a vehicle to park, in the same way both on the right side and on the left side, it is known to provide the vehicle with a pair of such sensors, arranged symmetrically, for example, on the rear bumper or near to it at the corner of the shape of the vehicle. Specifically, for semi-automatic or automatic parking systems the sensors are arranged sideways to the vehicle, so as to estimate the parking area.

The ultrasound sensors make it possible to detect the presence of a reflecting obstacle in an environment propagation volume of the sound wave that is near to the vehicle. The radar sensors make it possible to detect the presence of a reflecting obstacle in a predetermined field of view, with a distance measurement that is more precise as a function of the wave length used.

In a parking operation only the signal of the sensor arranged on the side of the vehicle where the parking is being carried out is used. The absence of an obstacle (therefore the absence of a return signal of a periodic interrogating signal) determines the detection of a free slot near to the vehicle, for example a parking space, the dimension of which - in particular the length in the direction of movement of the vehicle - is calculated indirectly based upon the odometric signal available on board of the vehicle, generally obtained through a phonic wheel of the ABS system, i.e. upon the distance travelled by the vehicle when passing by the free slot.

French patent application FR 2 771 500 describes a system for detecting free parking spaces at the side of a road on which a vehicle is travelling, based upon a monocular stereo vision technique. The system comprises shooting means arranged on one side of the vehicle and means for processing the images of the scene at the side of the vehicle, adapted to identify the presence of objects, to measure their distance from the vehicle so as to determine whether or not they are obstacles, and to detect the dimension of the free slot between two objects perceived as obstacles. The monocular stereo vision technique makes it possible to find out the three-dimensional representation of the space observed through the correlation of pairs of images obtained by the same shooting means from different positions, reached by the vehicle in different moments as it manoeuvres its way in.

FR 2 771 500, however, does not teach to simultaneously monitor many directions around the vehicle, for example, so as to extend the method for detecting parking spaces onto both sides of a road along which the vehicle is travelling, which could be a one-way street in which it is allowed to park on both sides of the road. An obvious duplication of the components described in FR 2 771 500 would disadvantageously determine an increase in the cost of the system as well as an increase in the complexity of the algorithms for processing the images.

EP 2081167 A2, considered as the closest prior art, discloses a method and a system for the recognition and / or the measurement of a parking space, based on the arrangement of a pair of 3D sensors having a wide field of view, respectively a front sensor and a rear sensor, each of which is able to shoot a scene towards a direction of movement of the vehicle.

The present invention has the object of providing a system and a method for detecting a free parking slot for a vehicle, which is adapted for the concurrent surveillance of a plurality of fields of view.

In particular, one object of the invention is to make a system and a method for the detection of a free parking slot the operation of which is harmonized in the combined observation on both sides of the vehicle.

A further purpose of the invention is to provide a system, for detecting a free parking slot, which is simple and cost-effective to make, with a minimum number of components and cables and small onerous computations, as well as being reliable and robust.

Yet another purpose of the invention is to make a system and a method for detecting a free parking slot that offers greater precision and accuracy of detection, in every parking condition, on a rectilinear or curved portion of road, and approach speed of the vehicle, so as to obtain an improved driving assistance system and possibly an improved parking assistance system for automatic parking manoeuvres.

According to the present invention such objects are achieved thanks to a system for detecting a parking slot for a vehicle having the characteristics mentioned in claim 1.

Particular embodiments form the subject of the dependent claims, which should be considered an integral and integrating part of the present description.

A further subject of the invention is a method for detecting a parking slot for a vehicle having the characteristics mentioned in claim 10.

Yet a further subject of the invention is a driving assistance system for a vehicle, as claimed.

In brief, the present invention is based upon the principle of using, as a system for detecting free slots for parking, an auxiliary system for viewing the environment around a vehicle that is adapted for concurrently surveying a plurality of lateral fields of view, which is arranged to process a three-dimensional view of the environment observed according to a monocular stereo vision technique based upon the analysis of a succession of images in a time sequence.

More specifically, the present invention is based upon a system having a number of image sensor devices that is equal to the number of monitored fields of view (typically two, right and left with respect to the vehicle, respectively), integrated with a common processing assembly for processing and the selective analysis of at least one of the flow of images collected by the sensors and for the identification of a parking slot from the selected flow of images.

The analysed flow of images is that from the image sensor device facing the side indicated by the activation of a direction indicator signal or, in the absence of a voluntary indication of the driver, the side in which the current lateral distance, between the vehicle and the detected objects constituting obstacles to the parking of the vehicle, is lowest.

The auxiliary viewing system can be used exclusively for detecting parking spaces or, in a coordinated modality, for detecting parking spaces and the concurrent representation to the driver of the fields of view observed around the vehicle, so as to assist the driver in the parking manoeuvres also with the visualisation of the parking scene or in other manoeuvres at low speed with a recovery of the field of view in areas of greater danger hidden from direct view of the driver.

The arrangement of the components of the system can be concentrated on a single circuit module, formed on a printed circuit board configured and arranged so as to house both the image sensor devices and the processing assembly, and located in a forward position at the front or at the rear of the vehicle at the middle axis, for the observation of front or rear lateral areas, respectively. Alternatively, the processing assembly can be made according to a distributed architecture in which the functions of processing the images for the representation to the driver, of analysis of the images for detecting a parking slot and possibly the accessory calculation functions of an assisted parking manoeuvre and actuation of the steering system of the vehicle for automatically carrying out the parking manoeuvre, are attributed to separate processing modules.

In a preferred embodiment, the sensor devices are in a number of two, symmetrically arranged on the opposite sides of the printed circuit board, each of which is adapted to shoot a scene in a respective field of view with a predetermined width and the processing unit is arranged to acquire from both sensor device, or from a pre-selected sensor device, a respective plurality of images representing a scene shot in successive moments from shooting points (or optical centres) that are spaced along a line of view or baseline, reached by the vehicle when moving.

By processing two successive images of a scene mostly in common to both the images, the processing unit is adapted to conduct a disparity analysis and to obtain a three dimensional representation of the depth map or scene, which makes it possible to estimate the space arrangement of the objects present in the scene (amongst which, the parking obstacles) in a sufficiently accurate manner and their distance from the vehicle, representative of the possible presence of a free slot in the field of view and of its cross section, which its identification as a parking slot depends upon.

Advantageously, the image signals are selectively acquired by predetermined selected areas of the sensors, by adopting a switching process (multiplexing) between the image elements (pixels) of the sensors in the formation of a composite image, as taught in the European patent application EP 2 166 766 by the same Applicant.

The integration of the visual information with the data representing the displacement of the vehicle over time, for example the odometric data from the on board sensors (phonic wheel) which measure the space travelled by the wheels of the vehicle, makes it possible to estimate the longitudinal dimension of the identified space in a sufficiently accurate manner, said dimension being compared with the minimum dimension necessary for the vehicle to perform a parking manoeuvre, as a function of the dimensions of the vehicle itself and of the characteristics of its steering system, so as to correctly indicate to the driver the possibility of parking (possibly assisted) or its impossibility. The indication to the driver can be of acoustic or visual nature, possibly integrated in the display system of the instrument panel or the infotainment system (navigator).

Advantageously, the processing of successive images of a scene occurs by acquiring a flow of images by a same sensor device at spaced apart time intervals on a dynamic baseline, that can be configured as a function of the displacement parameters of the vehicle, in particular of its absolute speed and of its movement direction (rectilinear, curved).

Further characteristics and advantages of the invention shall be shown in detail in the following detailed description of an embodiment thereof, given as an example and not for limiting purposes, with reference to the attached drawings, in which:

figure 1 generally shows a vehicle on which a system for acquiring images and for detecting a parking slot according to the invention is installed;
figure 2 is a schematic description of a visual scene in a vehicle equipped with a system according to the invention;
figure 3 is a perspective view of a shooting arrangement of the system subject of the invention;
figure 4 is an example circuit block diagram of an image processing assembly for detecting a parking slot according to the invention;

figures from 5 to 9 schematically show different embodiments of the architecture of the system subject of the invention;

figure 10 is a flow chart of a method for detecting a parking slot according to the invention;

figure 11 is a detailed flow chart of the initialization step of the flow chart of figure 10;

figures from 12 to 14 schematically represent different operative conditions of the system subject of the invention;

figure 15 is a detailed flow diagram of the processing step of the flow diagram of figure 10;

figures 16 and 17 schematically represent the baseline for shooting images by the system subject of the invention, with the vehicle driving in a straight line and with the vehicle turning, respectively;

figure 18 shows a curve representing the progression of a baseline correction factor for shooting images by the system of the invention, in a condition with the vehicle driving straight;

figure 19 shows graphical processing of the progression of the parameters for correcting the baseline for shooting images by the system of the invention, in a condition with the vehicle turning; and

figure 20 shows a curve representing the progression of a baseline correction factor for shooting images by the system of the invention, in a condition with the vehicle turning, as a function of the trajectory of the vehicle and of the curvature radius of the road.

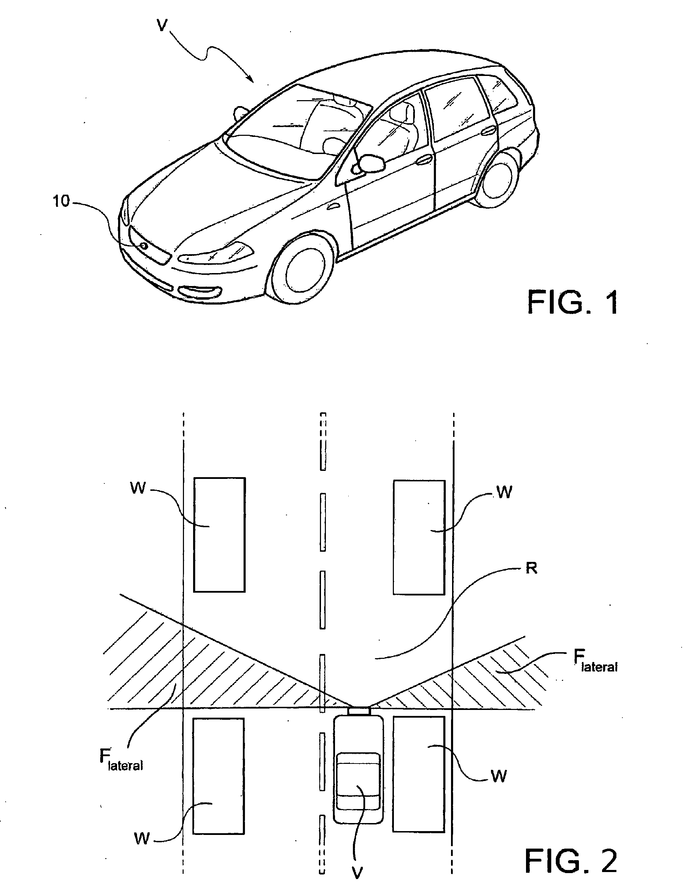

Figure 1 shows a vehicle V on which an onboard system is installed for the auxiliary viewing of the surrounding environment, and specifically for the simultaneous monitoring of two fields of view that are lateral with respect to the vehicle in opposite directions.

Such a system is used, for example, in driving assistance systems for monitoring and the concurrent representation to the driver of two fields of view that are typically hidden from the sight of the driver in normal driving or manoeuvre conditions, as described in the publication of European patent application No. 2 166 766.

The system comprises a pair of image sensor devices that are integrated with a common processing unit in a shooting arrangement 10 typically installed in a forward front position of the vehicle, for example - as shown - near to the front bumper. Such an arrangement 10 is arranged for concurrently shooting two different scenes in opposite lateral fields of view, so as to represent the relative images to the driver and to analyse the images shot so as to be aware of objects in the scene and their distance with respect to the vehicle.

Figure 2 shows the visual scenes of the system that equips the vehicle V. In the condition that is represented, the vehicle V is travelling on the right along a two-way road R having two lanes, at the sides of which other vehicles W are parked. The shooting arrangement 10 is adapted to symmetrically shoot scenes in the lateral fields of view $F_{lateral}$, with respect to the middle axis of the vehicle corresponding to its local forward direction.

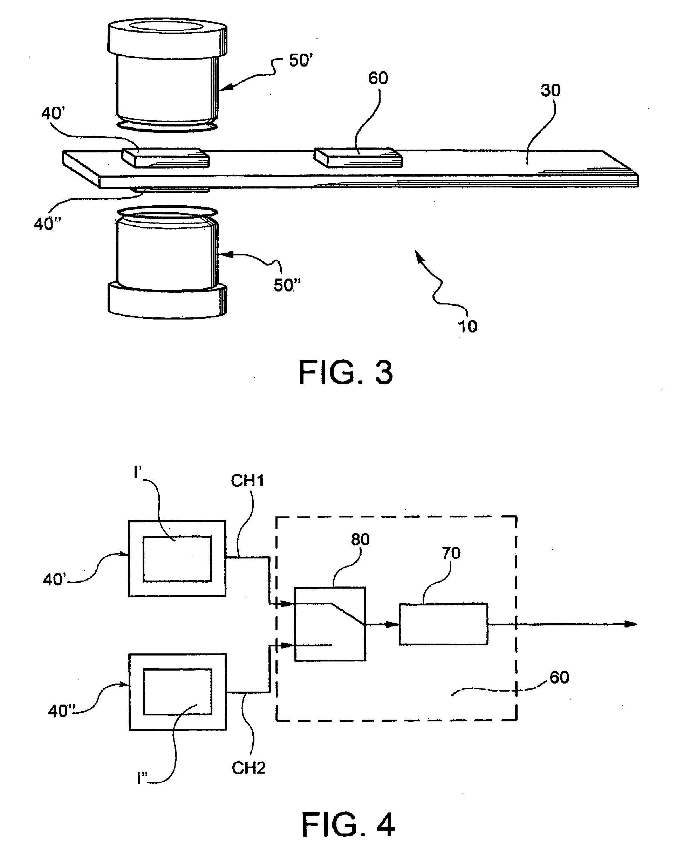

The shooting arrangement is shown in detail in figure 3. It comprises a printed circuit board 30 having on opposite faces two image sensor devices 40', 40", for example made in CCD or CMOS technology according to the prior art, adapted to convert a respective optical beam incident on them, into a plurality of relative electrical signals of images corresponding to the smallest image elements (pixels). The image sensor devices are preferably arranged according to a coaxial orientation and in a symmetrical position with respect to the plane of the board 30, and a respective optical focusing system 50', 50", for the concentration of the optical image beams, is associated to each of them. On the same support 30 a processing module 60, which is electrically connected to the sensor devices 40', 40" is mounted.

The assembly of the printed circuit support 30 and of the optical focusing systems 50' and 50" is enclosed and advantageously protected by a casing that is resistant to mechanical stress, provided with means for fixing to a part of the vehicle as well as with a port for letting out a cable for the electrical coupling of the module for processing images 60 with devices for treating the information on board of the vehicle, for example displaying devices in the passenger compartment.

Figure 4 represents a logic architecture of the system of the invention. The sensor devices 40', 40", adapted to acquire a respective plurality (a respective flow) of images I', I" over time, are connected with a calculation unit 70 of the processing module 60 through selector means 80, which are adapted to alternatively and continuously switch between a first and a second channel of images CH1, CH2.

According to the invention, the processing module 60 generates a composite image I, by placing portions of the images I' and I" side by side, said portions being collected by the sensor devices 40', 40" which include the pixels corresponding to selected predetermined areas of the sensor devices, according to a method described in the European patent application EP 2 166 766 by the same Applicant.

Preferably, in the shooting arrangement described here purely as an example, the areas selected for acquiring the image signals I', I" respectively correspond to the right or left half of a complete image frame so as to represent the portion of scene shot in the part of the outermost field of view with respect to the position of the vehicle (lateral and front parts of the vehicle if the device is installed at the front, or lateral and rear parts if the device is installed at the rear).

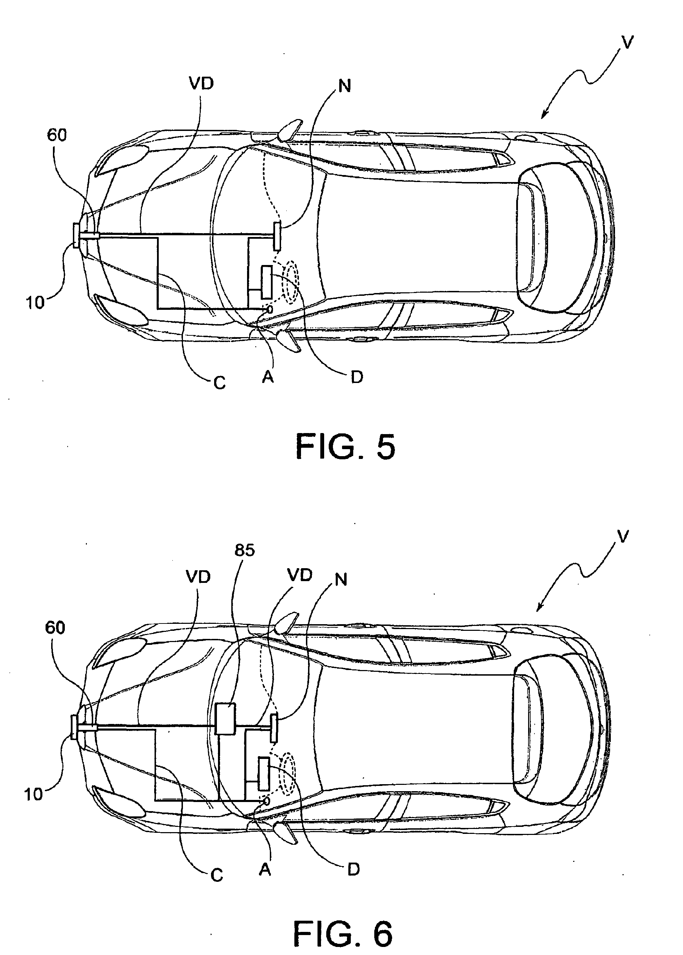

In a preferred embodiment, made according to a concentrated architecture shown in figure 5, the processing module 60 constitutes a processing assembly that is arranged for performing the selection, processing and analysis of the images acquired by the sensors 40', 40". In particular, the processing assembly 60 is arranged for:

- selecting the channel(s) of images;
- generating an image adapted to be represented to the driver of the vehicle through display means foreseen in the passenger compartment, for example in the screen of an info-navigation system N (NTSC compatible) or in the display D of an instrument panel; the generated image is a composite image that is obtained by placing selected portions of the images collected by both sensors side by side;
- the analysis of a three-dimensional image from at least one pair of images shot in successive moments by a same sensor device, the detection of the presence of objects that can represent obstacles to parking, the estimation of their lateral distance with respect to the vehicle;
- identifying a free slot if objects are detected at a lateral distance from the vehicle that is greater than a predetermined threshold (or, in an equivalent manner if objects are not detected at a lateral distance from the vehicle lower than a predetermined threshold), essentially corresponding to the width of the vehicle plus an additional margin so as to take into account the lateral distance between the moving vehicle V and the parked vehicles W;
- estimating the longitudinal dimension of the identified free slot between two detected obstacles and comparing it with a minimum space dimension necessary for the vehicle to perform a parking manoeuvre;
- indicating to the driver the outcome of the detection through the display means N foreseen in the passenger compartment, for example the screen of an info-navigation system (NTSC compatible), or the display D of the instrument panel (by indicator lights switching on or the representation of pictograms or significant icons), or yet through an acoustic warning (tone, synthesised voice) sent out by the on board audio system A.

For these functions the processing assembly 60 is coupled with a communication line C of the vehicle such as for example the CAN bus, from which it receives the odometric data (collected by the phonic wheels associated with each wheel of the vehicle and by the steering angle sensor, not shown), and with a video data transmission line VD that is connected with the info-navigation system. Analogously, the processing assembly 60 is coupled with one or more audio communication interfaces through an analogue or digital communication line dedicated for the transmission of acoustic warnings, for example the same CAN network if the acoustic warning is emitted by a synthesised voice managed by the navigation system N or by the instrument panel D.

Figures 6 to 9 show different embodiments of the architecture of the system of the invention, in which elements or components that are identical or functionally equivalent to those illustrated in figure 5 have been indicated with the same reference numerals.

Figure 6 represents a possible embodiment of a distributed architecture, in which the processing assembly includes a processing module 60 that is arranged for generating an image that is adapted to be represented to the driver of the vehicle through the display means N foreseen in the passenger compartment, integrated into the shooting arrangement 10, and a separate analysis module 85 that is arranged for detecting the presence of obstacles, estimating the dimension of the identified parking slot and warning to the driver. The processing module 60 is coupled with a communication line C of the vehicle like for example the CAN bus, from which it receives the odometric data. A video data transmission line VD connects the shooting arrangement 10 with the analysis module 85 and the info-navigation system, so as to ensure also the function of a viewing aid of fields of view that are hidden from the direct visual perception of the driver. Analogously, the processing assembly 60 is coupled with one or more audio communication interfaces through an analogue or digital communication line dedicated to the transmission of the acoustic warnings (not illustrated).

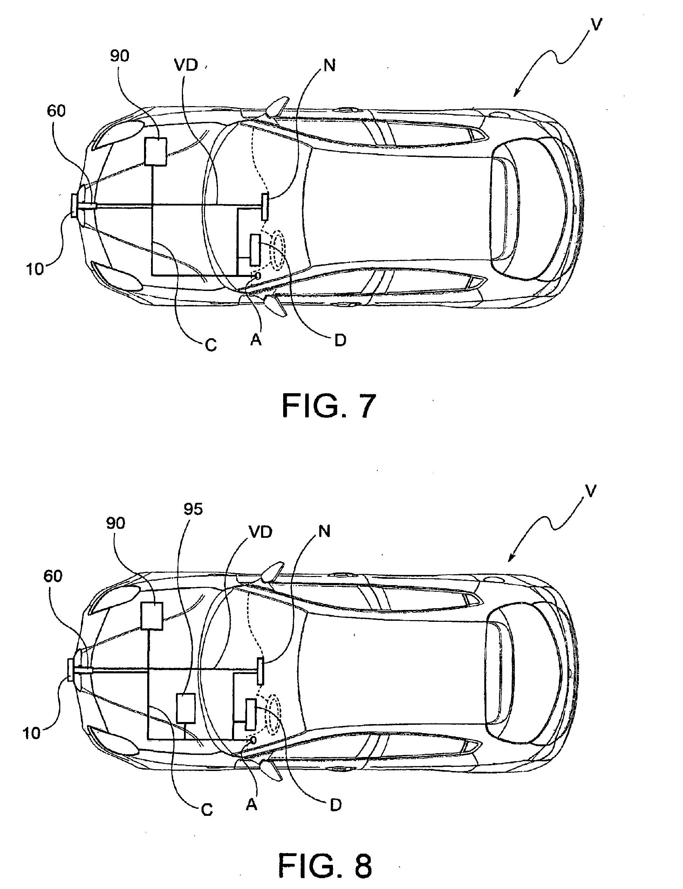

Figure 7 represents a possible embodiment of a concentrated architecture, provided with the active parking assistance function.

The processing module 60 constitutes a processing assembly arranged for the generation of an image that is adapted to be represented to the driver of the vehicle through the display means N foreseen in the passenger compartment, for detecting the presence of obstacles, estimating the dimension of the parking slot identified and warning the driver, as well as for generating a parking trajectory for an automatic parking manoeuvre. The processing module 60 is coupled with a communication line C of the vehicle like for example the CAN bus, from which it receives the odometric data and on which it transmits the identification data of a free parking slot intended for a management unit of the steering system 90, arranged for actuating the calculated automatic parking manoeuvre. A video data transmission line VD connects the shooting arrangement 10 to the info-navigation system, so as to also ensure the function of viewing aid of fields of view hidden from the direct visual perception of the driver. Analogously, the processing assembly 60 is coupled with one or more audio communication interfaces through an analogue or digital communication line dedicated for the transmission of the acoustic warnings (not illustrated).

Figure 8 represents a possible embodiment of a distributed architecture, which is provided with the active parking assistance function.

The processing assembly includes a processing module 60 that is arranged for generating an image that is adapted to be represented to the driver of the vehicle through the display means N foreseen in the passenger compartment, as well as for detecting the presence of obstacles, estimating the dimension of the identified parking slot and warning the driver. A separate calculation module 95 is arranged for generating a parking trajectory for an automatic parking manoeuvre. The processing module 60 is coupled with a communication line C of the vehicle like for example the CAN bus, from which it receives the odometric data and on which it transmits identification data of a free parking slot intended for the calculation module 95. Also a unit for managing the steering unit 90 faces onto the communication line C, arranged so as to actuate the calculated automatic parking manoeuvre. A video data transmission line VD connects the shooting arrangement 10 to the info-navigation system, so as to also ensure the function of visual aid of fields of view that are hidden from the direct visual perception of the driver. Analogously, the processing assembly 60 is coupled with one or more audio communication interfaces through an analogue or digital communication line that is dedicated for the transmission of the acoustic warnings (not illustrated).

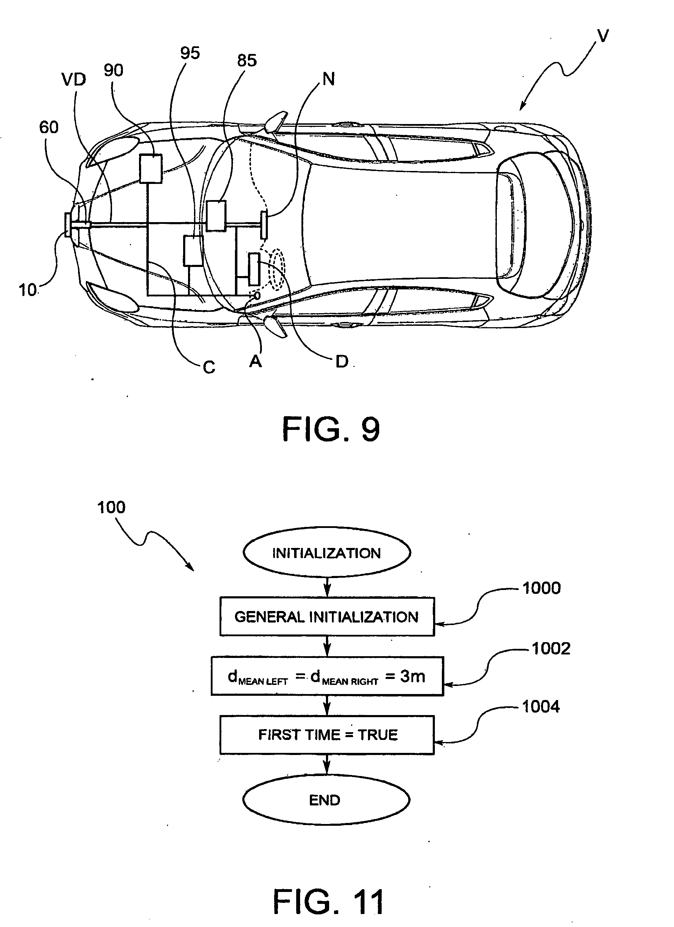

Figure 9 represents a variant of the embodiment of distributed architecture, provided with the function of active parking assistance, shown in figure 8.

The processing assembly includes a processing module 60 that is arranged for the generation of an image that is adapted to be represented to the driver of the vehicle through the display means N that are foreseen in the passenger compartment, integrated in the shooting arrangement 10, and a separate analysis module 85 arranged for detecting the presence of obstacles, estimating the size of the identified parking slot and warning the driver. A separate calculation module 95 is arranged for generating a parking trajectory for an automatic parking manoeuvre. The processing module 60 is coupled with a communication line C of the vehicle like for example the CAN bus, from which it receives the odometric data. The analysis unit 85 transmits the identification data of a free parking slot on the communication line C, to the calculation module 95. Also a unit for managing the steering unit 90 faces onto the communication line C, arranged so as to actuate the calculated automatic parking manoeuvre. A video data transmission line VD connects the shooting arrangement 10 to the analysis module 85 and the info-navigation system, so as to also ensure the function of viewing aid of fields of view that are hidden from the direct visual perception of the driver. Analogously, the processing assembly 60 is coupled with one or more audio communication interfaces through an analogue or digital communication line dedicated for the transmission of the acoustic warnings (not illustrated).

The operation of the system of the invention is described in the rest of the description in detail with reference to the function of detecting a parking slot. The function of representing to the driver a composite image of the areas around the vehicle that are hidden from direct observation of the driver is analogous to that described in European patent application No. 2 166 766 by the same Applicant. The functions of generating a parking trajectory and actuation of a steering plant for performing a parking manoeuvre according to the generated trajectory are not described any further, since they can be referred to methods already known at the state of art, for example described in patent applications DE102007036251A1, US2009260907A1, EP09425546.0.

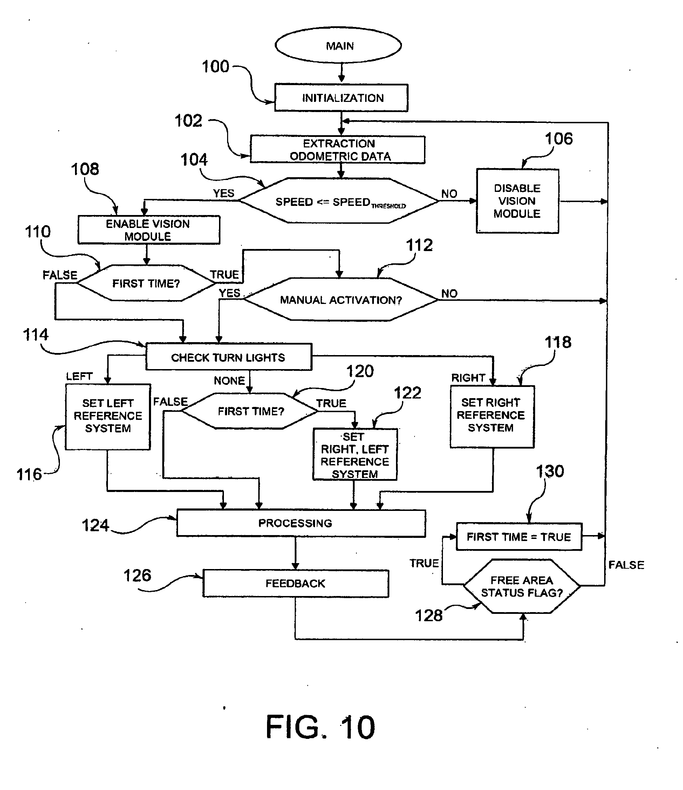

We shall now consider the flow chart represented in figure 10.

The driver activates the auxiliary vision system 10 voluntarily by pressing a special button (or by selecting the function from an on board menu), or it can be activated automatically when the vehicle is started up.

When it is activated, the system carries out an initialization step 100 that comprises, as shown in figure 11, at step 1000 the initialization of the general variables used in the method (for example, an initial baseline is set equal to 10 centimetres), at the step 1002 the assignment of values to support variables $d_{MEAN\ RIGHT}$ and $d_{MEAN\ LEFT}$ expressing the values of the mean distances from the profile of the parked vehicles at the sides of the road, which are set equal to one another and preferably equal, for example, to 3m, and at the step 1004 the setting of the "first time" flag to the "true" value.

The processing of the images, however, is enabled only if a predetermined condition of the speed of the vehicle is obtained.

At step 102, the system intercepts the odometric data of the vehicle present on the on board communication line C (normally the steering angle, the yaw rate and the current speed).

The odometric data is advantageously extracted with a periodic task or, in the case of architecture with a microprocessor (DSP), by means of the service routine associated with the interrupt of a cyclic timer, the setting of which is correlated to the periodicity of the data available on the communication bus (in the case of the CAN line, the information is transmitted with a periodicity of 10 milliseconds).

At the step 104 the detected speed is compared with a predetermined maximum speed threshold, or with a predetermined speed range (speedthreshold).

In the case in which the current speed of the vehicle is greater than the predetermined maximum threshold (or at the upper extreme of the predetermined speed range), for which an incompatible driving speed is recognised with an approaching condition of the vehicle and searching of a parking space, the shooting of the images is disabled (step 106) and the system is arranged for a subsequent extraction of the odometric data and consequent speed comparison. In the case in which the speed of the vehicle complies with the threshold, the shooting of the images is enabled (step 108) and the image sensor devices 40', 40" are activated so as to acquire a respective time succession of images.

If the shooting of images is enabled the setting of the "first time" indicator is verified at step 110.

The auxiliary vision system can be used both for the representation to the driver of the observed fields of view around the vehicle, so as to assist the driver in the parking manoeuvre also with the visualization of the parking scene or in other manoeuvres at low speed with a recovery of the field of view in areas of greater danger that are hidden from the direct visual perception of the driver, and for the automatic detection of parking slots. In the first case, the function of monitoring around the vehicle operates automatically; in the second case, the function of automatically detecting a parking slot is subordinate to the voluntary activation by the driver, identified by step 112, if the "first time" indicator is set to the "true" value.

As previously outlined, the auxiliary visual system is adapted to return a video flow comprising the combination of images which represent the scene observed on the right side (first channel CH1) and on the left side (second channel CH2) of the vehicle.

The detection of a parking slot can therefore be preliminarily carried out on both sides of the vehicle in the case in which the driver does not act by defining a preference, or on the search side selected through the activation of the indicator lights of the vehicle.

At the step 114 the system checks the status of the indicator lights. There are three possible conditions that can occur, respectively:

1) the driver has actuated the right indicator light, indicating the intention of parking on the right side of the road;
2) the driver has actuated the left indicator light, indicating the intention of parking on the left side of the road;
3) the driver has not actuated any indicator light.

In the first two cases the method passes to steps 116 or 118 in which the relative reference system of the measurements is set and a variable "modality" is updated, which can be set to the value "left" or "right" according to the set reference system. Indeed, in order to build a map of the scenery viewed on the selected side and to establish the distance and the trajectory of motion travelled by the vehicle, it is necessary to define an origin of a system of reference space coordinates, and this is the position in which the function of automatic detection of a parking slot is activated.

In the third case, since there is no specific indication by the driver, the method passes on to step 120 in which it is verified whether the search for a free parking space has just been activated (indicated by giving a "true" value to the "first time" variable). In such a case, for the first processing step both reference systems are set (step 122) and the "modality" is set as "null".

Once the reference system and the modality have been selected, the method passes on to step 124, in which the processing module 60 or the image analysis module 85 analyse pairs of images over time so as to detect the presence of obstacles and their distance from the vehicle, identifying a possible free slot (condition in which a free space state flag is set) and estimating the dimension of the space identified between two obstacles based upon the overall distance travelled by the vehicle, according to the modalities mentioned above.

Subsequently, a step 126 is carried out for communicating the outcome of the verification, and possibly for actuating the steering and braking units if the system has control over them. Such a communication step comprises an indication to the driver that is active only when a suitable parking slot is detected (the information comes from the free space state flag), or an active indication during the entire approaching manoeuvre, which is capable of switching from an indication of absence of a free slot if no free slot is detected or if the dimension of the identified space is not considered suitable for parking in, to an indication of presence of a parking slot if the dimension of the identified free slot is considered suitable for the parking manoeuvre.

At the end of the indication step the method verifies the status of the free area state flag at step 128 so as to establish whether the system can again enable the search for a parking area at step 112, by setting the "first time" indicator to the "true" value at step 130.

From steps 128 and/or 130 the algorithm starts from step 102 of extraction of the odometric data and consequent step 104 of speed verification, repeating the operations until the shooting of images is once again disabled (step 106), for example by acceleration of the vehicle, or until the manual deactivation of the detection of a parking slot function, or until the vehicle has finally stopped.

During the iterations, at step 124, the system analyses successive pairs of images acquired by the device and increases the measure of the identified parking slot based upon the overall distance travelled by the vehicle since the first identification of a free slot.

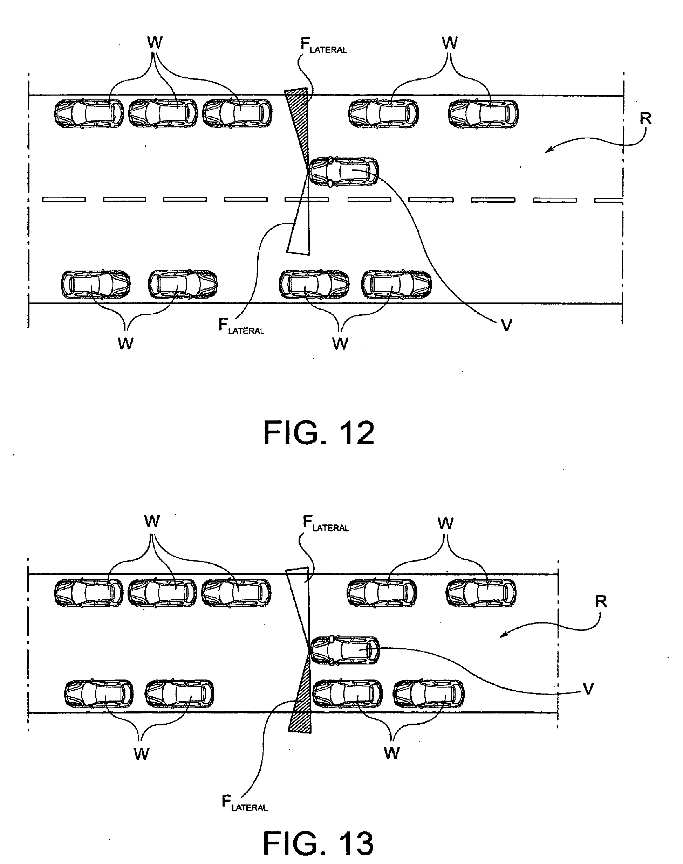

The operation modality described ensures the operation of the system in all driving conditions of a vehicle V in a road R, shown in figures 12, 13 and 14, which include two-way roads and one-way roads. Only as an example we show portions of rectilinear roads, but the system and the method of the present invention are adapted to be effectively applied also in the case of curved road portions.

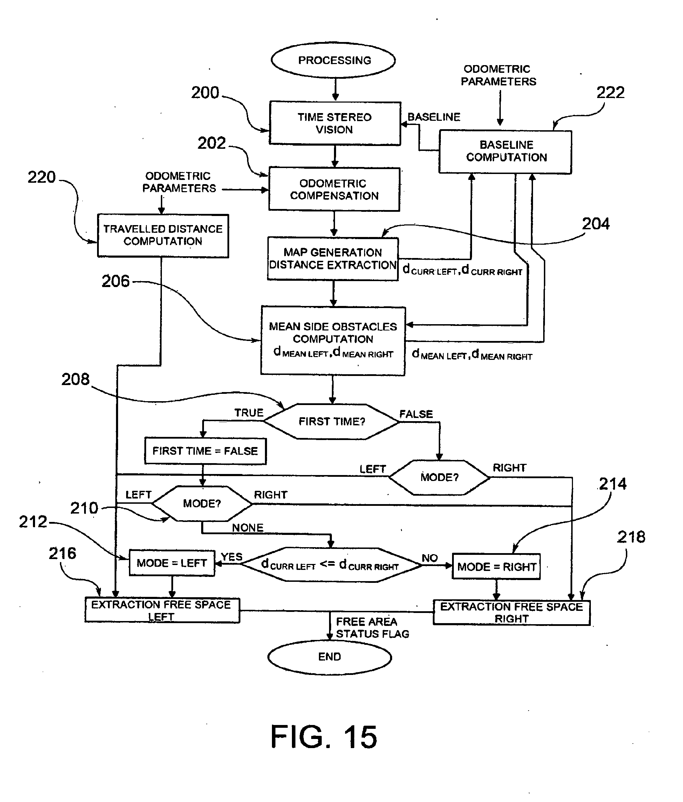

In the rest of the description, with reference to figures 15 to 19, the operations carried out in step 124 of figure 10 by the processing module 60 in an architecture of a concentrated system or by the analysis module 85 in an architecture of a distributed system of a free parking slot are described in greater detail.

As stated earlier, the analysis of the images is based upon a monocular time stereo vision approach, the fundamental principles of which are described in FR 2771 500, and shall be only briefly mentioned in the rest of the description.

In the time stereo vision block 200 the processing/analysis module operates on the composite image formed by putting together the partial images I', I" acquired by the image sensors 40', 40" and, by exploiting the disparity between two images that are successive over time acquired by the same sensor with respect to a predefined baseline, identifies the common points and starts the stereo vision process. From this processing a depth map is generated which does not take into account the lateral dynamics of the vehicle.

The odometric compensation block 202, once the steering angle, number of revs (angular position) of the wheels and yaw rate information is known, makes it possible to take into account the lateral dynamics of the vehicle and if needed to compensate for the depth map.

The subsequent block 204 for creating the map and extracting the distances, generates a depth map of the scene shot, taking into account the displacement direction of the vehicle in the absolute reference system previously defined based upon the parking side. In particular, the motion of the vehicle, along a curved trajectory, is taken into account, said motion being recognised through the odometric data of the previous block 202. The block 204 for creating the map and extracting the distances also provides the current lateral distances between the vehicle and the objects (obstacles) on the side of it, identified with the variables $d_{CURR\ LEFT}$ and $d_{CURR\ RIGHT}$.

Once the depth map and the information of the distance between the vehicle and the obstacles on the side are known, at the block 206 the mean distances of the obstacles $d_{AEANR\text{-}IGHT}$ and $d_{MEAN\ LEFT}$ are calculated (updated) on each side, based upon N samples of previous distances. The number of samples considered is a dynamic parameter, which can vary as a function of the baseline, or the distance that runs between two consecutive shooting points, and it is set so as to ensure the calculation of the mean distances on a portion of road with a length equal to at least 7 metres in normal operating conditions.

The data of the mean lateral distances $d_{MEAN\ RJGHT}$ and $d_{MEAN\ LEFT}$ are used for updating the baseline. The current lateral distances $d_{CURR\ RIGHT}$ and $d_{CURR\ LEFT}$, on the other hand, at the first pair of images (case "first time = true" at step 208), are used for the selection of the searching side in the case in which a preference has not been set by the driver by means of the indicator lights (case "modality = null" at step 210). In such a case, the modality is set based upon the shortest of these distances, coherently with step 212 or 214.

The last step of the method is the extraction of the identified free slot at step 216 or 218 according to the side on which the searching is to be carried out (such a searching involves only the half of the map having the distances of interest). The extraction of the longitudinal distance of the parking space is based upon the measurement of the distance travelled from the beginning of a possible area to the end of the area, identified by sharp transitions in terms of lateral distance (the transition of the beginning of an area is detected through a variation of a distance from short to long, whereas the transition of the end of an area is detected through a variation of the distance from long to short). Therefore, the identification of two successive transitions, but with opposite sign reveals the presence of a free slot between two obstacles, which could be potentially suitable for parking. Therefore, a dimensional comparison is carried out between the longitudinal dimension of the detected free slot (obtained for example from odometric data of the vehicle at step 202 and from the functional block 220 for calculating the distance travelled) and the longitudinal dimension of the vehicle, taking into account the margins necessary for carrying out the parking manoeuvre in a manual or automatic manner. With reference to figure 10, such an information passes on to the communication step 126.

Parallel to the blocks (to the operations) 200-218 a block (a step) 222 is foreseen for updating calculation of the baseline, carried out from the odometric data of the vehicle and from the current lateral distance data and mean distances of the measured obstacles calculated at steps 204 and 206, respectively.

The inventors have found that by using a constant baseline it is not possible to estimate the depth distance of the obstacles in the case of parking in a curved portion of road, since there are problems when building disparity maps.

Advantageously, the invention proposes to use a dynamic baseline, so as to ensure the estimation of the lateral distances with great precision also in the case of curved portions. By default, the baseline is preferably set equal to 20 centimetres, but it is reconfigured at certain conditions for the subsequent repetition steps of the described method.

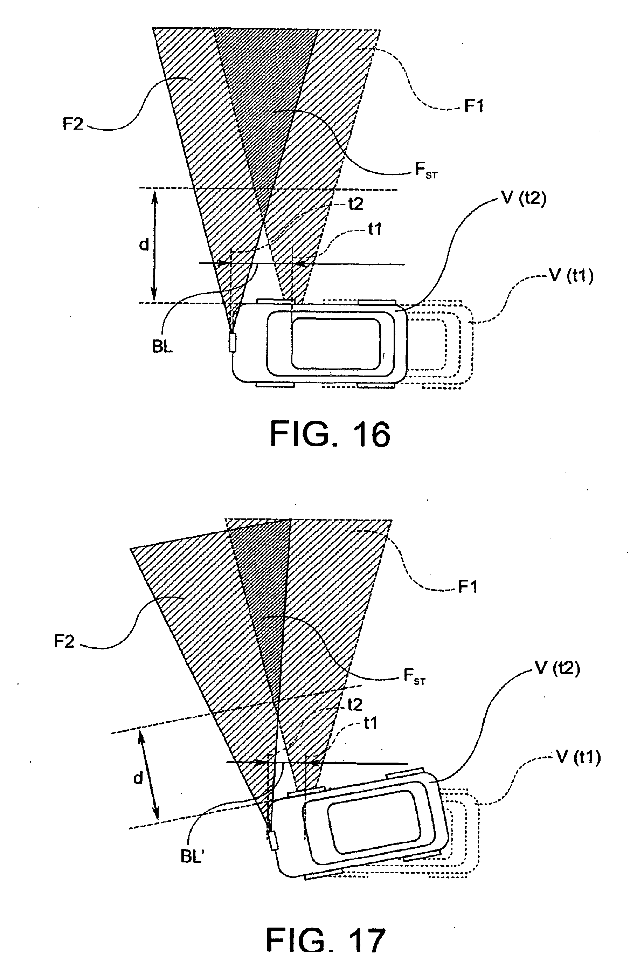

Figure 16 shows a schematic representation of a baseline BL for shooting images by the system of the invention, in a condition with the vehicle driving straight. Figure 17 shows a schematic representation of a modified baseline BL' for shooting images by the system of the invention, in a curved driving condition.

In both figures a vehicle V is shown in two successive positions in the driving direction, respectively at an instant t1 and at a successive instant t2, indicated with V(t1) and V(t2), respectively. F1 and F2 indicate the lateral fields of view of the image sensor device facing the right side of the vehicle, for example the device 40', in the two time instances t1 and t2. $F_{ST}$ indicates the shooting area common to the two fields of view, useful in order to process a stereo vision of the scene lateral to the vehicle. The distance d between the side of the vehicle and the vertex of the common shooting area identifies the operational limit of the system, below which it is not possible to have stereo vision.

The baseline is automatically reconfigured by the calculation block 222 based upon the boundary conditions defined, for example, by the speed of the vehicle and by the trajectory of the vehicle.

The speed has an inversely proportional influence upon the duration of the baseline. One first corrective factor

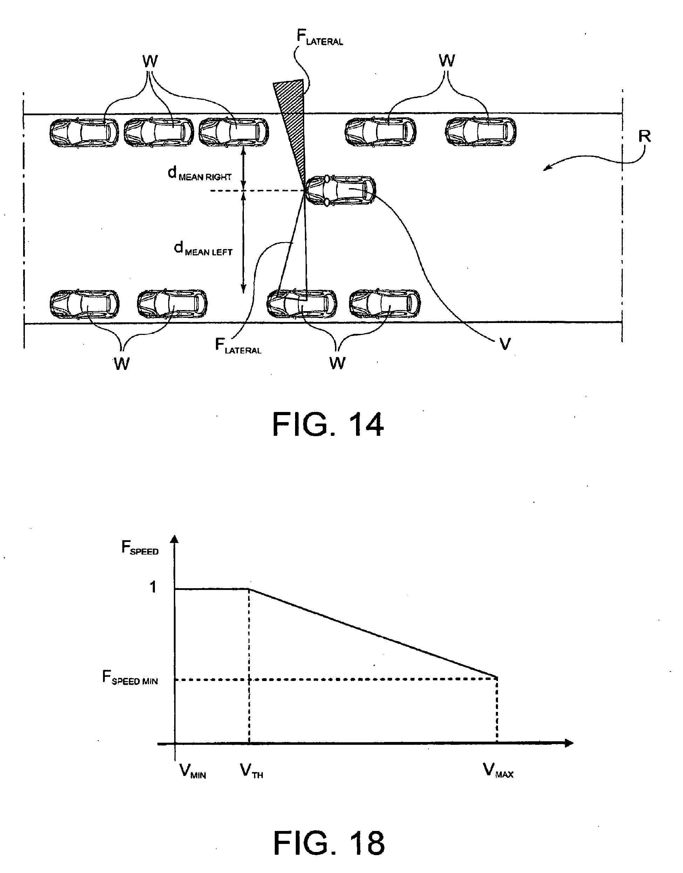

$F_{SPEED}$ of the standard baseline value is calculated as a function of the speed. One example of the performance of the $F_{SPEED}$ factor is shown in figure 18. The $F_{SPEED}$ factor is constant and equal to 1 for speed values of the vehicle that are lower than a predetermined threshold $V_{TH}$, thus decreasing according to a linear law up to a minimum value $F_{SPEED\ MIN}$ for a speed $V_{MAX}$, above which the system is inactive or disabled.

A second corrective factor $F_{CURVE}$ of the standard baseline value is calculated as a function of the curvature of the trajectory carried out by the vehicle. There are two terms that define the parameter in exam, the trajectory followed by the vehicle during its approaching manoeuvre and the curvature radius of the road section.

By analysing a predetermined number N of samples from the odometric data representing the steering angle and the yaw rate over time, associated with a predefined time duration of the baseline $T_{BASELINE}$, for every iteration information is extracted on the motion of the vehicle and therefore the curvature radius $R_{TRAJECTORY}$ of the trajectory travelled by the vehicle in its approaching over movement, according to the expression:

$$R_{TRAJECTORY} = \frac{L}{f_1(yaw\ rate, steer\ angle, baseline)}$$

where L represents the length of the vehicle and $f_1$ is a predetermined function which relates the yaw rate to the steering angle, dependent upon the steering unit of the vehicle and upon the type of vehicle.

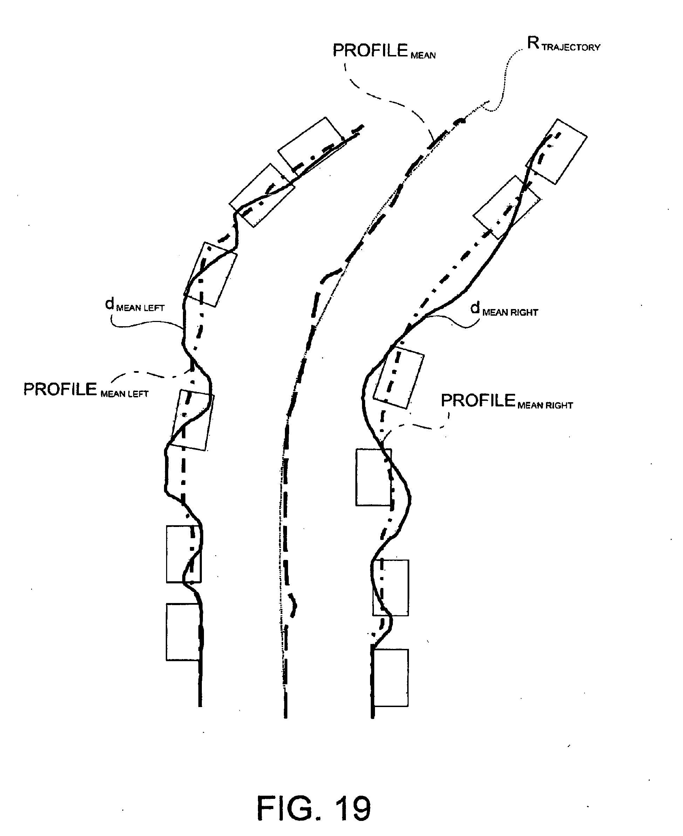

The estimation of the curvature radius $R_{CURVE}$ of the road portion travelled by the vehicle is on the other hand defined as a function of the measured data of the lateral distances of the vehicle on the right and on the left side of the roadway which can be travelled along, i.e. of the distance of the vehicle V from the vehicles W or from other obstacles present on the side of the road, or from the edge of the road if there are no parked vehicles. It is obtained as follows, with reference to figure 19:

- the mean value of the mean distances of the vehicle on the left side of the roadway $d_{MEAN\ LEFT}$ is calculated, given a predetermined number N of measurements in contiguous past time instances, spaced apart by the duration of the baseline $T_{BASELINE}$, the mean value defines the mean distance profile of the obstacles on such a side, indicated in the figure with $PROFILE_{MEAN}$ LEFT;
- the mean value of the mean distances of the vehicle on the right side of the road site $d_{MEAN\ RIGHT}$ is calculated, given a predetermined number N of measurements in contiguous past time instances, spaced apart by the duration of the baseline $T_{BASELINE}$; the mean value defines the mean distance profile of the obstacles on such a side, indicated in the figure with $PROFILE_{MEAN\ RIGHT}$;
- the mean value of the two variables $PROFILE_{MEAN\ LEFT}$, $PROFILE_{MEAN\ RIGHT}$ is calculated, obtaining a mean profile value $PROFILE_{MEAN}$,
- the curvature radius $R_{CURVE}$ due to the positioning of the lateral obstacles is extracted by analysing the data of the $PROFILE_{MEAN}$ over time. For such a purpose, for example, the last three data in time order $PROFILE_{MEAN}(t)$, $PROFILE_{MEAN}(t-1)$ and $PROFILE_{MEAN}(t-2)$ can be used to obtain the local curvature radius, by using the mathematical law of the expression of the circumference.

By combining the two terms of curvature $R_{TRAJECTORY}$ and $R_{CURVE}$ through a predetermined function $f_2$, the corrective factor $F_{CURVE}$ is obtained:

$$F_{CURVE} = f_2(R_{TRAJECTORY}, R_{CURVE})$$

The function $f_2$ is such that the sharper the curve of the road or the more the vehicle steers, the more the corrective factor $F_{CURVE}$ drops towards a minimum value $F_{CURVE\ MIN}$ so as to ensure in any case a disparity analysis between two successive images, necessary for stereo vision.

The definition of the corrective factor $F_{CURVE}$ is advantageously expressed as the product of two terms:

$$F_{CURVE} = F_{CURVE}' * F_{CURVE}'' = f_2'(R_{TRAJECTORY}) * f_2''(R_{CURVE})$$

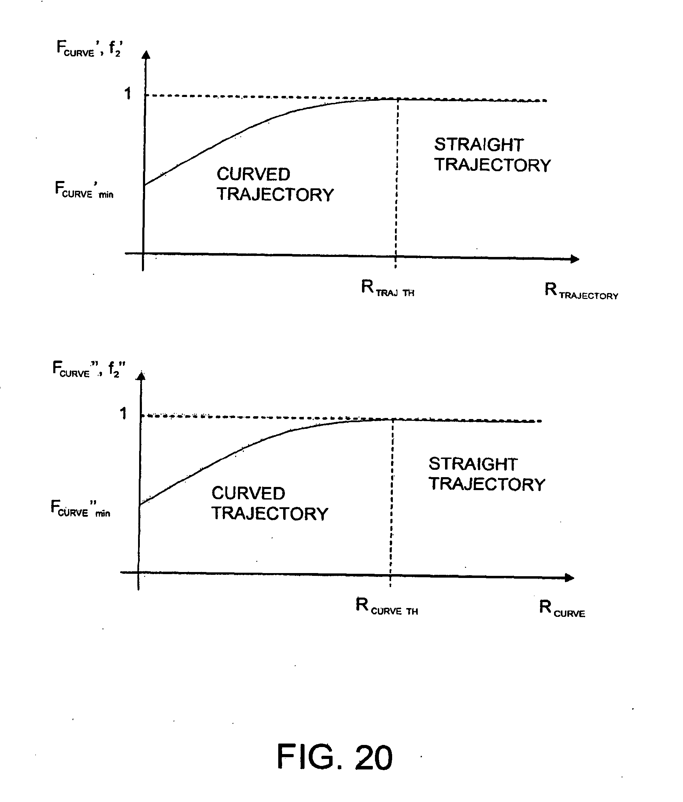

where the progression of the $F_{CURVE}'$ and $F_{CURVE}''$ is represented in figure 20.

Finally, the estimation of the dynamic baseline is thus formulated as follows:

$$Baseline = Baseline_{STANDARD} \cdot F_{SPEED} \cdot F_{CURVE}$$

Advantageously, providing a dynamic baseline for the acquisition of images makes it possible to optimize the shooting of the pairs of images to be correlated in the analysis process for the monocular stereo-vision, varying the density of the acquisitions over time with the variation of the approaching speed of the vehicle, to keep the distance between two contiguous acquisition points constant, or increasing the density of the acquisitions over time to obtain a greater accuracy of analysis and estimation of the parking slots in the case in which there are curved portions of road.

Of course, without affecting the principle of the invention, the embodiments and the implementing details can be widely varied with respect to what has been described and illustrated purely as an example and not for limiting purposes, without for this reason departing from the scope of protection of the invention defined by the attached claims.

**Claims**

1.   A system for detecting a parking slot for a vehicle (V), comprising:

means (40', 40") for the concurrent shooting of scenes of the environment around the vehicle (V) in a plurality of fields of view ($F_{lateral}$); and
associated means (60) for processing the acquired images (I', I"), adapted to obtain a three dimensional representation of the observed scenes through processing at least one pair of images relating to a field of view ($F_{lateral}$),
the processing means (60) being arranged for:

- selecting the images (I'; I") from a predetermined image acquisition device (40'; 40");
- detecting the presence of objects constituting obstacles to the parking of the vehicle (V) in the field of view ($F_{lateral}$) associated with the selected image acquisition device (40'; 40");
- identifying a free slot if objects are detected at a lateral distance from the vehicle (V) greater than a predetermined threshold;
- estimating the longitudinal dimension of the free slot thus identified, based upon data representing the displacement of the vehicle (V); and
- detecting a parking slot by comparison between the estimated longitudinal dimension of the identified free slot and a predetermined minimum dimension necessary to the vehicle (V) for performing a parking manoeuvre,

**characterised in that**
said shooting means include at least one pair of image acquisition devices (40', 40") adapted to acquire corresponding pluralities of images (I', I") in fields of view ($F_{lateral}$) facing sideways to the vehicle (V) according to directions of view that are essentially opposite and symmetrical with respect to the middle axis of the vehicle (V) corresponding to its local forward direction, from shooting points spaced along a line of view, reached by the vehicle when moving;
wherein each image acquisition device (40; 40") is adapted to acquire a plurality of images (I'; I") from consecutive shooting points spaced by a predefined spatial interval (baseline) along said line of view, wherein said interval between shooting points is dynamically adjustable by a corrective factor ($F_{SPEED}$, $F_{CURVE}$) representative of the speed of the vehicle and the driving condition of the vehicle.

2.   A system according to claim 1, wherein said processing means (60) are arranged for selecting the flow of images from the image acquisition device (40'; 40") facing the side indicated by the activation of a direction indicator signal.

3.   A system according to claim 1, wherein said processing means (60) are arranged for selecting the flow of images from the image acquisition device (40'; 40") facing the side where the current lateral distance between the vehicle and the detected objects constituting obstacles to the parking of the vehicle (V) is lowest.

4.   A system according to any one of the previous claims, wherein the image acquisition devices (40', 40") are arranged in a forward position at the front or at the rear of the vehicle (V), at the mid-section of the vehicle, and are adapted to shoot scenes in a pair of lateral fields of view ($F_{lateral}$) of the vehicle.

5. A System according to any one of the previous claims, wherein the processing means (60) are coupled to an onboard communication line (C), from where they are adapted to receive odometric data of the vehicle, and to a data transmission line (VD) connected with onboard displaying means, from which they are arranged to display to the driver images of the field of view ($F_{lateral}$), which are lateral to the vehicle, said processing means (60) being arranged to bring to the driver's attention the outcome of detection in an acoustic and/or visual manner.

6. A system according to any one of the previous claims, wherein said image acquisition devices (40', 40") are operating when the vehicle driving speed is lower than a predetemined threshold speed.

7. A system according to any one of the previous claims, wherein said interval between shooting points is dynamically adjustable by a corrective factor ($F_{SPEED}$) that is representative of the speed of the vehicle.

8. A system according to any one of the previous claims, wherein said interval between shooting points is dynamically adjustable by a corrective factor ($F_{CURVE}$) that is representative of the trajectory followed by the vehicle (V) in its approaching manoeuvre, which is determined based upon the odometric data representing the steering angle and the yaw rate of the vehicle, and upon the curvature radius of the road section, which is determined as a function of the measured data of the lateral distances of the detected obstacles from the vehicle.

9. A method for detecting a parking slot for a vehicle (V), comprising:

the concurrent shooting of scenes of the environment around the vehicle (V) in a plurality of fields of view ($F_{lateral}$);
the selection of images (I', I") from a predetermined field of view ($F_{lateral}$);
the detection of the presence of objects in the aforementioned field of view ($F_{lateral}$), that may constitute obstacles to the parking of the vehicle (V);
the identification of a free slot if objects are detected at a lateral distance from the vehicle (V) greater than a predetermined threshold;
the estimation of the longitudinal dimension of the identified free slot, based upon data representing the displacement of the vehicle (V); and
the detection of a parking slot by comparison between the estimated longitudinal dimension of the identified free slot with a predetermined minimum dimension necessary to the vehicle (V) for performing a parking manoeuvre,
**characterised in that**
it includes the acquisition of corresponding pluralities of images (I'; I") in fields of view ($F_{lateral}$) facing sideways to the vehicle (V) according to directions of view that are essentially opposite and symmetrical with respect to the middle axis of the vehicle (V) corresponding to its local forward direction, from shooting points spaced along a line of view, reached from the vehicle when moving,
the interval between shooting points being dynamically adjustable by a corrective factor ($F_{SPEED}$, $F_{CURVE}$) representative of the driving condition of the vehicle.

10. A driving assistance system for a vehicle, comprising a system for detecting a parking slot for a vehicle according to any one of claims 1 to 8, associated with calculating means arranged for generating a parking trajectory and with a system for actuating an automatic parking manoeuvre.

**Patentansprüche**

1. System zum Detektieren einer Parklücke für ein Fahrzeug (V), das aufweist:

Einrichtungen (40', 40") zum gleichzeitigen Aufnehmen von Szenen der Umgebung des Fahrzeugs (V) in einer Vielzahl von Blickfeldern ($F_{lateral}$) ; und
eine zugehörige Einrichtung (60) zum Verarbeiten der erfassten Bilder (I', I"), die angepasst ist, durch das Verarbeiten mindestens eines Paares von zu einem Blickfeld ($F_{lateral}$) gehörenden Bildern eine dreidimensionale Darstellung der beobachteten Szenen zu erhalten,
wobei die Verarbeitungseinrichtung (60) angeordnet ist, um

- die Bilder (I'; I") aus einer vorgegebenen Bilderfassungsvorrichtung (40'; 40") auszuwählen;

EP 2 468 573 B1

- das Vorhandensein von Objekten, die Hindernisse beim Einparken des Fahrzeugs (V) in dem zu der ausgewählten Bilderfassungsvorrichtung (40'; 40") gehörenden Blickfeld ($F_{lateral}$) darstellen, zu detektieren;
- eine freie Lücke zu identifizieren, falls Objekte in einer seitlichen Entfernung von dem Fahrzeug (V) detektiert werden, die größer als ein vorgegebener Schwellenwert ist;
- die Längenabmessung der so identifizierten freien Lücke auf der Basis von Daten, die die Verschiebung des Fahrzeugs (V) repräsentieren, überschlägig zu ermitteln; und
- eine Parklücke durch Vergleich zwischen der überschlägig ermittelten Längenabmessung der identifizierten freien Lücke und einer vorgegebenen Mindestabmessung, die nötig ist, damit das Fahrzeug (V) ein Parkmanöver durchführen kann, zu detektieren, **dadurch gekennzeichnet, dass**

die Aufnahmeeinrichtung mindestens ein Paar Bilderfassungsvorrichtungen (40', 40") besitzt, die angepasst sind, entsprechende Mengen von Bildern (I', I") in Blickfeldern ($F_{lateral}$), die nach den Seiten des Fahrzeugs (V) gerichtet sind, je nach Blickrichtungen,
die im Wesentlichen entgegengesetzt und symmetrisch in Bezug auf die Mittelachse des Fahrzeugs (V) entsprechend seiner örtlichen Vorwärtsrichtung sind, von entlang einer Blicklinie im Abstand befindlichen, vom Fahrzeug während der Bewegung erreichten Aufnahmepunkten zu erfassen;
wobei jede Bilderfassungsvorrichtung (40'; 40") angepasst ist, eine Menge von Bildern (I'; I") von aufeinanderfolgenden, durch einen vordefinierten räumlichen Abstand (Basislinie) entlang der Blicklinie getrennten Aufnahmepunkten aus zu erfassen, wobei der Abstand zwischen den Aufnahmepunkten durch einen Korrekturfaktor ($F_{SPEED}$, $F_{CURVE}$), der für die Geschwindigkeit und die Fahrbedingung des Fahrzeugs repräsentativ ist, dynamisch anpassbar ist.

2. System nach Anspruch 1, wobei die Verarbeitungseinrichtung (60) angeordnet ist, um den Strom von Bildern aus der Bilderfassungsvorrichtung (40'; 40"), die der durch das Aktivieren eines Fahrtrichtungssignals bezeichneten Seite zugewandt ist, auszuwählen.

3. System nach Anspruch 1, wobei die Verarbeitungseinrichtung (60) angeordnet ist, um den Strom von Bildern aus der Bilderfassungsvorrichtung (40'; 40"), die derjenigen Seite zugewandt ist, auszuwählen, auf der die aktuelle seitliche Entfernung zwischen dem Fahrzeug und den detektierten Objekten, die beim Einparken des Fahrzeugs (V) Hindernisse darstellen, am geringsten ist.

4. System nach einem der vorangegangenen Ansprüche, wobei die Bilderfassungsvorrichtungen (40', 40") in einer vorwärts gerichteten Position an der Vorderseite oder an der Rückseite des Fahrzeugs (V), im mittleren Abschnitt des Fahrzeugs, angeordnet und angepasst sind, Szenen in einem Paar von seitlichen Blickfeldern ($F_{lateral}$) des Fahrzeugs aufzunehmen.

5. System nach einem der vorangegangenen Ansprüche, wobei die Verarbeitungseinrichtung (60) an eine Bordkommunikationsleitung (C), von wo sie Wegstreckendaten des Fahrzeugs empfängt, und an eine Datenübertragungsleitung (VD), die mit einer Bordanzeigeeinrichtung verbunden ist, von der aus sie dem Fahrer Bilder vom Blickfeld ($F_{lateral}$) seitlich des Fahrzeugs zeigt, gekoppelt ist, wobei die Verarbeitungseinrichtung (60) angeordnet ist, um den Fahrer auf akustische und/oder optische Weise auf das Ergebnis der Detektierung aufmerksam zu machen.

6. System nach einem der vorangegangenen Ansprüche, wobei die Bilderfassungsvorrichtungen (40', 40") arbeiten, wenn die Fahrtgeschwindigkeit des Fahrzeugs niedriger als eine vorgegebene Schwellengeschwindigkeit ist.

7. System nach einem der vorangegangenen Ansprüche, wobei der Abstand zwischen Aufnahmepunkten durch einen Korrekturfaktor ($F_{SPEED}$), der für die Geschwindigkeit des Fahrzeugs repräsentativ ist, dynamisch anpassbar ist.

8. System nach einem der vorangegangenen Ansprüche, wobei der Abstand zwischen Aufnahmepunkten durch einen Korrekturfaktor ($F_{CURVE}$), der für die von dem Fahrzeug (V) bei seinem Manöver der Annäherung verfolgte Bewegungsbahn repräsentativ ist, welcher auf der Basis der Wegstreckendaten, die den Lenkeinschlagwinkel und die Gierrate des Fahrzeugs repräsentieren, und auf der Basis des Krümmungsradius des Straßenabschnitts bestimmt wird, welcher in Abhängigkeit von den gemessenen Daten der seitlichen Entfernungen der detektierten Hindernisse von dem Fahrzeug bestimmt wird, dynamisch anpassbar ist.

9. Verfahren zum Detektieren einer Parklücke für ein Fahrzeug (V), das beinhaltet:

das gleichzeitige Aufnehmen von Szenen der Umgebung des Fahrzeugs (V) in einer Vielzahl von Blickfeldern

(F$_{lateral}$);

die Auswahl von Bildern (I', I") aus einem vorgegebenen Blickfeld (F$_{lateral}$) ;

die Detektierung des Vorhandenseins von Objekten im vorgenannten Blickfeld (F$_{lateral}$), die beim Einparken des Fahrzeugs (V) Hindernisse darstellen können;

die Identifizierung einer freien Lücke, falls Objekte in einer seitlichen Entfernung von dem Fahrzeug (V) detektiert werden, die größer als ein vorgegebener Schwellenwert ist;

die überschlägige Ermittlung der Längenabmessung der identifizierten freien Lücke auf der Basis von Daten, die die Verschiebung des Fahrzeugs (V) repräsentieren; und

die Detektierung einer Parklücke durch Vergleich zwischen der überschlägig ermittelten Längenabmessung der identifizierten freien Lücke mit einer vorgegebenen Mindestabmessung, die nötig ist, damit das Fahrzeug (V) ein Parkmanöver durchführen kann,

**dadurch gekennzeichnet, dass**

es die Erfassung entsprechender Mengen von Bildern (I'; I'') in Blickfeldern (F$_{lateral}$), die nach den Seiten des Fahrzeugs (V) gerichtet sind, je nach Blickrichtungen, die im Wesentlichen entgegengesetzt und symmetrisch in Bezug auf die Mittelachse des Fahrzeugs (V) entsprechend seiner örtlichen Vorwärtsrichtung sind, von entlang einer Blicklinie im Abstand befindlichen, vom Fahrzeug während der Bewegung erreichten Aufnahmepunkten beinhaltet, wobei der Abstand zwischen Aufnahmepunkten durch einen für die Fahrbedingung des Fahrzeugs repräsentativen Korrekturfaktor (F$_{SPEED}$, F$_{CURVE}$) dynamisch anpassbar ist.

10. Fahrassistenzsystem für ein Fahrzeug, aufweisend ein System zum Detektieren einer Parklücke für ein Fahrzeug nach einem der Ansprüche 1 bis 8, verbunden mit Berechnungseinrichtungen, die angeordnet sind, um eine Parkbewegungsbahn zu generieren, und mit einem System zum Herbeiführen eines automatischen Parkmanövers.

## Revendications

1. Système de détection d'un créneau de stationnement pour un véhicule (V), le système comprenant :

des moyens (40', 40") photographiant simultanément dans plusieurs champs de vision (F$_{latéral}$) des scènes de l'environnement qui entoure le véhicule (V) et

des moyens (60) associés pour traiter les images (I', I") saisies et adaptées pour obtenir une représentation tridimensionnelle des scènes observées en traitant au moins deux images associées à un champ de vision (F$_{latéral}$),

les moyens de traitement (60) étant agencés pour :

sélectionner les images (I', I") dans un dispositif prédéterminé (40', 40") d'acquisition d'image,

détecter la présence d'objets constituant des obstacles au stationnement du véhicule (V) dans le champ de vision (F$_{latéral}$) associé au dispositif (40', 40") sélectionné d'acquisition d'image,

identifier un créneau libre si des objets sont détectés à une distance latérale du véhicule (V) supérieure à un seuil prédéterminé,

estimer la dimension longitudinale du créneau libre ainsi identifié sur la base de données représentant le déplacement du véhicule (V) et détecter la présence d'un créneau de stationnement en comparant la dimension longitudinale estimée du créneau libre identifié et la dimension minimale prédéterminée nécessaire pour que le véhicule (V) exécute une manoeuvre de stationnement,

**caractérisé en ce que**

lesdits moyens de photographie comprennent au moins deux dispositifs (40', 40") d'acquisition d'image adaptés pour saisir plusieurs images (I', I") correspondantes dans des champs de vision (F$_{latéral}$) situés sur le côté du véhicule (V) dans des directions de vision essentiellement opposées et symétriques par rapport à l'axe central du véhicule (V) et correspondant à sa direction locale vers l'avant, à partir de points de photographie situés à distance sur une ligne de vision atteinte par le véhicule lorsqu'il se déplace,

chaque dispositif (40', 40") d'acquisition d'image étant adapté pour saisir plusieurs images (I', I") à partir de points de photographie successifs situés à un intervalle spatial prédéfini (ligne de base) sur ladite ligne de vision, ledit intervalle entre les points de photographie pouvant être ajusté dynamiquement par un facteur de correction (F$_{SPEED}$, F$_{CURVE}$) qui représente la vitesse du véhicule et l'état de déplacement du véhicule.

2. Système selon la revendication 1, dans lequel lesdits moyens de traitement (60) sont agencés de manière à sélectionner le flux d'images du dispositif (40', 40") d'acquisition d'image situé du côté indiqué par l'activation d'un signal indicateur de direction.

**3.** Système selon la revendication 1, dans lequel lesdits moyens de traitement (60) sont agencés de manière à sélectionner le flux d'images du dispositif (40', 40") d'acquisition d'image situé du côté pour lequel la distance latérale entre le véhicule et les objets détectés constituant des obstacles au stationnement du véhicule (V) est la plus petite.

**4.** Système selon l'une quelconque des revendications précédentes, dans lequel les dispositifs (40', 40") d'acquisition d'image sont agencés en position avant à l'avant ou à l'arrière du véhicule (V), sur la partie centrale du véhicule et sont adaptés pour photographier des scènes dans deux champs de vision latéraux ($F_{latéral}$) du véhicule.

**5.** Système selon l'une quelconque des revendications précédentes, dans lequel les moyens de traitement (60) sont raccordés à une ligne de communication embarquée (C) depuis laquelle ils sont adaptés pour recevoir des données odométriques du véhicule et à une ligne (VD) de transmission de données raccordée à des moyens d'affichage embarqués par lesquels ils sont agencés pour afficher au conducteur des images du champ de vision ($F_{latéral}$) situé latéralement par rapport au véhicule, lesdits moyens de traitement (60) étant agencés pour attirer l'attention du conducteur sur le résultat de la détection de manière acoustique et/ou visuelle.

**6.** Système selon l'une quelconque des revendications précédentes, dans lequel lesdits dispositifs (40', 40") d'acquisition d'image travaillent lorsque la vitesse d'avancement du véhicule est inférieure à une vitesse de seuil prédéterminée.

**7.** Système selon l'une quelconque des revendications précédentes, dans lequel ledit intervalle entre les points de photographie peut être ajusté dynamiquement par un facteur de correction ($F_{SPEED}$) qui représente la vitesse du véhicule.

**8.** Système selon l'une quelconque des revendications précédentes, dans lequel ledit intervalle entre les points de photographie peut être ajusté dynamiquement par un facteur de correction ($F_{CURVE}$) qui représente la trajectoire suivie par le véhicule (V) dans sa manoeuvre d'approche et déterminé sur la base des données odométriques qui représentent l'angle de braquage et l'angle de lacet du véhicule, et du rayon de courbure de la partie de la chaussée, déterminé en fonction des données mesurées des distances latérales des obstacles détectés par rapport au véhicule.

**9.** Procédé de détection d'un créneau de stationnement pour un véhicule (V), le procédé comportant les étapes qui consistent à :

> photographier simultanément dans plusieurs champs de vision ($F_{latéral}$) des scènes de l'environnement qui entoure le véhicule (V),
> sélectionner des images (I', I") dans un champ de vision ($F_{latéral}$) prédéterminé,
> détecter dans ledit champ de vision ($F_{latéral}$) la présence d'objets qui pourraient constituer des obstacles au stationnement du véhicule (V),
> identifier un créneau libre si les objets détectés présentent par rapport au véhicule (V) une distance latérale supérieure à un seuil prédéterminé,
> estimer la dimension longitudinale du créneau libre identifié sur la base de données représentant le déplacement du véhicule (V) et
> détecter la présence d'un créneau de stationnement en comparant la dimension longitudinale estimée du créneau libre identifié à une dimension minimale prédéterminée nécessaire pour que le véhicule (V) puisse effectuer une manoeuvre de stationnement, **caractérisé en ce que**
> le procédé inclut l'acquisition de plusieurs images (I', I") correspondantes dans des champs de vision ($F_{latéral}$) situés latéralement par rapport au véhicule (V) dans des directions de vision essentiellement opposées et symétriques par rapport à l'axe central du véhicule (V) et correspondant à sa direction locale avant à partir de points de photographie situés à distance sur une ligne de vision atteinte par le véhicule lorsqu'il se déplace et **en ce que** l'intervalle entre les points de photographie peut être ajusté dynamiquement par un facteur de correction ($F_{SPEED}$, $F_{CURVE}$) qui représente l'état de déplacement du véhicule.

**10.** Système d'assistance à la conduite d'un véhicule comprenant un système de détection d'un créneau de stationnement pour le véhicule selon l'une quelconque des revendications 1 à 8, le système étant associé à des moyens de calcul agencés pour produire une trajectoire de stationnement et à un système d'actionnement d'une manoeuvre automatique de stationnement.

**FIG. 1**

**FIG. 2**

FIG. 3

FIG. 4

FIG. 5

FIG. 6

FIG. 7

FIG. 8

FIG. 9

FIG. 11

**MAIN**

100 → INITIALIZATION

102 → EXTRACTION ODOMETRIC DATA

104 → SPEED <= SPEED$_{THRESHOLD}$

YES → 108 ENABLE VISION MODULE

NO → 106 DISABLE VISION MODULE

110 FIRST TIME?

FALSE

TRUE

112 MANUAL ACTIVATION?

YES

NO

114 → CHECK TURN LIGHTS

LEFT → 116 SET LEFT REFERENCE SYSTEM

NONE → 120 FIRST TIME?

FALSE

TRUE → 122 SET RIGHT, LEFT REFERENCE SYSTEM

RIGHT → 118 SET RIGHT REFERENCE SYSTEM

124 → PROCESSING

126 → FEEDBACK

130 → FIRST TIME = TRUE

TRUE

128 FREE AREA STATUS FLAG?

FALSE

## FIG. 10

FIG. 12

FIG. 13

PROCESSING

200

TIME STEREO VISION

BASELINE

ODOMETRIC PARAMETERS

222

BASELINE COMPUTATION

202

ODOMETRIC PARAMETERS

220

ODOMETRIC COMPENSATION

TRAVELLED DISTANCE COMPUTATION

MAP GENERATION DISTANCE EXTRACTION $d_{CURR\ LEFT}, d_{CURR\ RIGHT}$

204

206

MEAN SIDE OBSTACLES COMPUTATION $d_{MEAN\ LEFT}, d_{MEAN\ RIGHT}$

$d_{MEAN\ LEFT}, d_{MEAN\ RIGHT}$

208

TRUE    FIRST TIME?    FALSE

FIRST TIME = FALSE

LEFT    MODE?    RIGHT

214

LEFT    MODE?    RIGHT

210

NONE

212

216

MODE = LEFT    YES    $d_{CURR\ LEFT} \leq d_{CURR\ RIGHT}$    NO    MODE = RIGHT

218

EXTRACTION FREE SPACE LEFT

FREE AREA STATUS FLAG

EXTRACTION FREE SPACE RIGHT

END

# FIG. 15

**FIG. 14**

**FIG. 18**

## FIG. 16

## FIG. 17

**FIG. 19**

FIG. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2771500
- EP 2081167 A2
- EP 2166766 A
- DE 102007036251 A1
- US 2009260907 A1
- EP 09425546 A